# EUROPEAN PATENT SPECIFICATION

(11) **EP 3 534 694 B1**
(45) Date of publication and mention of the grant of the patent: **28.07.2021**
(21) Application number: 17807932.3
(22) Date of filing: 02.11.2017
(51) Int. Cl.: A01J 5/12

(54) **PULSATOR ASSEMBLY COMPRISING A PNEUMATIC PULSATOR AND A STIMULATION DEVICE**
EINER PNEUMATISCHEN MILCHPULSATORANORDNUNG MIT MILCHPULSATOR UND STIMULATIONSVORRICHTUNG
ENSEMBLE PULSATEUR DE TRAITE AVEC PULSATEUR PNEUMATIQUE DE TRAITE ET DISPOSITIF DE STIMULATION

(30) Priority: 03.11.2016 IT 201600110616
(43) Date of publication of application: 11.09.2019
(73) Proprietor: Interpuls S.P.A., 42020 Albinea (RE) (IT)
(72) Inventor: MCDONALD, Paul Anthony, 42020 Albinea (RE) (IT); NICOLINI, Gabriele, 42020 Albinea (RE) (IT); SICURI, Roberto, deceased (IT)
(74) Representative: Robba, Pierpaolo
(86) International application number: PCT/IB2017/056805
(87) International publication number: WO 2018/083612

(56) References cited:
- EP-A2- 1 336 335
- US-A- 4 391 221
- US-A1- 2015 150 211

## Description

### Technical Field

The present invention relates to a pulsator assembly comprising a pneumatic pulsator and the stimulation device, which stimulation is capable of varying the operating frequency of said pulsator over a desired time period.

### Prior Art

In the field of automated milking, plants are known in which milking takes place according to an operating cycle providing for alternately subjecting the teat of the animal to be milked to a milking step, in which the teat is subjected to a predetermined under-pressure, and to a massaging step, in which the teat is substantially brought again to atmospheric pressure: in the milking step, the under-pressure allows milk withdrawal; in the massaging step, the presence of atmospheric pressure allows blood recirculation within the teat.

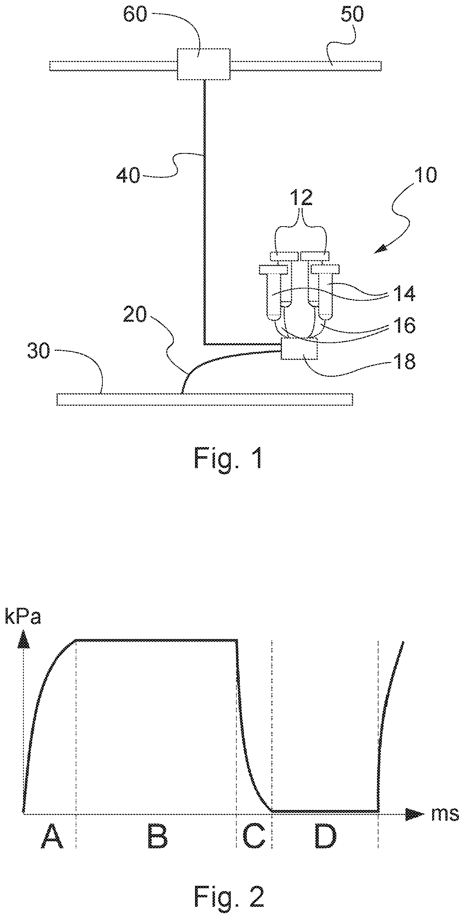

Referring to Figure 1, in order to obtain the operating cycle described above, a milking plant generally comprises a milking assembly 10, which, in turn, comprises a plurality of liners 12 made of a flexible material, each of said liners coming into contact with a teat of the animal and exerting thereon the action necessary for milking; each liner 12 is enclosed within a corresponding teat cup shell 14 made of a rigid material and is connected to a claw 18 by means of a corresponding short tube 16. The claw 18 of the milking assembly 10 is connected on one side to a long milk tube 20 for transferring the milked milk to a milk line 30, and on the other side to a pulsation tube 40 for connecting the milking assembly 10 to a vacuum line 50.

Along the vacuum line 50 there is provided a pulsator 60 allowing to alternately introduce vacuum and atmospheric air into the chamber interposed between the inner wall of the teat cup shell 14 and the outer wall of the liner 12, thus allowing alternate opening and closing of the liner and establishing the alternation between the milking step and the massaging step.

More particularly, and with reference to Figure 2, the milking step comprises a first sub-step (A) starting from the time at which the liner 12 begins to open and ending at the time in which the liner is fully open, and a second sub-step (B) corresponding to the actual time during which the liner 12 remains open; similarly, the massaging step comprises a first sub-step (C) starting from the time at which the liner 12 begins to close and ending at the time in which the liner is completely closed, and a second sub-step (D) corresponding to the actual time during which the liner 12 remains completely closed.

The regularity of this cycle in terms of frequency and duration of the individual steps, is essential for the well-being of the animals and for a good milking performance, as during the milking step the teat is exposed to a vacuum and undergoes a stress which must accurately controlled and limited in time, and during the massaging step the teat is relaxed and the blood must have the time necessary for perfusing the teat so that the teat is ready to release milk at the time the next milking step starts.

In addition, the regular rhythmicity of alternation of these steps stimulates the brain receptors of the animals to keep the milk production process active for the entire duration of milking.

Usually, the milking assembly is connected to the animal's teats after the teats have been cleaned and some starting milk drops have been withdrawn manually in order to stimulate the animal to produce milk.

However, in many cases these preparatory steps are not sufficient for preparing the animal in order to get the animal ready to give milk at the time the animal is attached to the milking assembly, this causing a lengthening of the milking times and involving the risk of damages to the teats, which are exposed to the stress caused by vacuum without giving any milk.

In order to overcome this drawback, in several milking plants it is widespread practice to effect an additional preparatory step called "stimulation".

This stimulation step is carried out by attaching the milking assembly to the animal's teats and effecting an initial milking at high frequency (for example, 180 - 200 pulsations per minute (ppm)) over a limited time period (for example, 20 - 60 seconds): the high frequency of pulsation brings about a quick opening and closing of the liners on the teats, thus stimulating the animal's brain receptors that regulate milk production.

In order to be able to carry out the stimulation step it is thus necessary to intervene onto the pulsator frequency by increasing it over a limited time period.

In the case of electronic pulsators, in which the pulsation cycle is generated by the opening and closing of two reels controlled by means of an electric pulse managed by a control unit, the stimulation is controlled by said control unit and can be, after all, easily implemented.

On the contrary, the implementation of stimulation is all the more difficult in case of pneumatic pulsators.

Generally, in pneumatic pulsators the pulsation cycle is generated by means of the linear movement of a main slide valve controlled by a pair of diaphragms and by inversion means allowing to cyclically invert the direction of the linear movement of the main slide valve.

Several types of pneumatic pulsators, either liquid-driven or air-driven, are available on the market and they can be classified as follows:
- pulsators designed for operating at a specific vacuum level, where the pulsation frequency is not adjustable depending on the vacuum level within the vacuum line of the milking plant;
- pulsators in which the pulsation frequency is manually adjustable depending on the vacuum level, but such manual regulation requires the intervention of a professional technician from the manufacturing company;
- pulsators in which the pulsation frequency is manually adjustable by an operator depending on the vacuum level, for example for adjusting/correcting the frequency depending on the vacuum itself and/or for taking into account possible variations of the environmental conditions. In known pneumatic pulsators, even when the pulsation frequency is adjustable depending on the vacuum level, it is in any case impossible to adjust the frequency in order to carry out the stimulation step, because there are substantially insuperable limitations in terms of excessive duration of the stimulation step, poor precision and difficult intervention by the operator.

Therefore, there are no pneumatic pulsators available on the market that are capable of achieving such stimulation step with pneumatic pulsators. US 2015/150211 discloses a stimulation device which can be associated to a pulsator and is positioned between such pulsator and a milking assembly. Said stimulation device acts on the vacuum degree applied by the pulsator to the teat of the animal to be milked.

An object of the present invention is to overcome the prior art drawbacks by providing pulsator assembly equipped with a stimulation device adapted to be coupled to a milking pneumatic pulsator in order to allow to carry out the stimulation step.

This and other objects are achieved with the pulsator assembly as claimed in the appended claims.

### Summary of the Invention

According to the invention, a stimulation device is provided that can be connected to a pneumatic pulsator and together with the latter forms a pulsator assembly.

Owing to the fact that the stimulation device comprises a by-pass channel intended for the passage of the pneumatic medium and having a cross-section larger than that of the pulsator adjustment channel, said stimulation device provides a by-pass of said adjustment channel, said by-pass allowing to accelerate the pulsator frequency over the desired time period.

Indeed, the pneumatic medium will have the tendency to pass through the channel offering less resistance, therefore the channel of the stimulation device, thus generating the stimulation cycle.

The by-pass channel of the stimulation device is sized so as to obtain a frequency suitable for stimulation (for example, 180 - 200 ppm).

Advantageously, variation of the frequency is obtained without intervening onto the frequency adjusting pin provided in the pulsator adjustment channel, whereby at the end of the time period during which the stimulation device is active, the nominal frequency of the pulsator (for example, 60 ppm) can be exactly and properly restored.

In a preferred embodiment, the stimulation device is devised so that the stimulation time period is set and the channel of the stimulation device closes automatically after said set time period.

In a preferred embodiment, said timing system for setting the stimulation duration employs an incompressible fluid, this allowing to minimize the overall dimensions and to ensure tightness of the channel of the stimulation device without the need of generating overpressures. Preferably, said incompressible fluid is a fluid that can operate within a temperature range from 0°C to 40°C without undergoing large variations in viscosity, such as an anti-freeze liquid, thus allowing the stimulation device to operate also in cold environments.

### Brief Description of the Drawings

Further features and advantages of the invention will become more apparent from the following description of a preferred embodiment of the invention, given by way of example with reference to the appended drawings, in which:
- Figure 1 schematically shows the essential parts of a milking plant;
- Figure 2 is a diagram schematically showing the milking and massaging steps of an operating cycle of a milking plant;
- Figure 3 is an exploded perspective view of a pneumatic pulsator of a pulsator assembly according to the invention;
- Figure 4 is a cross-sectional view of a pulsator assembly according to the invention, showing the stimulation device of the pulsator assembly according to the invention;
- Figure 5 is a sectional view taken along the line V-V of the stimulation device of Figure 4;
- Figures 6a and 6b schematically show possible structural variants of the pulsator assembly of Figure 4.

### Description of a Preferred Embodiment

A preferred embodiment of the invention will be described below by way of non-limiting example. Although in the embodiment shown reference is made to an air-driven pneumatic pulsator, the pulsator assembly according to the invention might include a pneumatic pulsator using a different medium, for example a liquid.

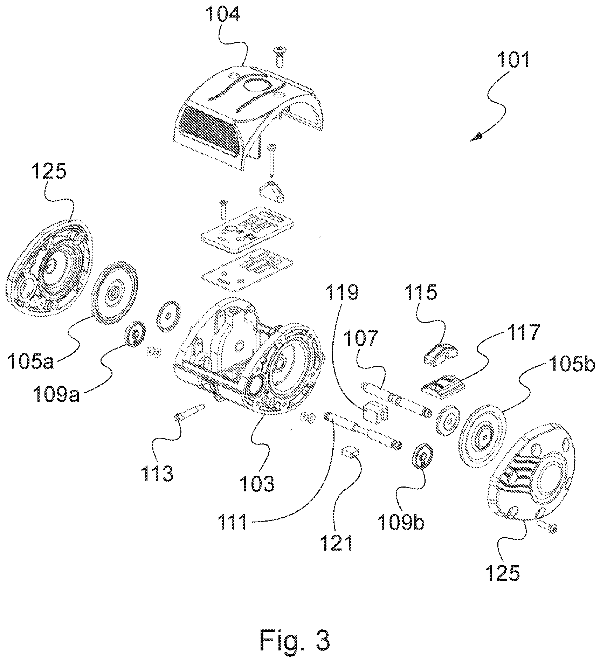

Referring at first to Figure 3, there is illustrated a pneumatic pulsator 101, more precisely an air-driven pneumatic pulsator.

Said pneumatic pulsator 101 comprises a body 103, preferably provided with a removable hood 104, in which body channels are defined which are suitable for the passage, in an alternate manner, of air at atmospheric pressure or of vacuum, and accommodate - in corresponding seats formed in the body 103 - a pair of main diaphragms 105a, 105b which control the movement of a main shaft 107 and divide each its respective seat into an inner chamber and an outer chamber. The outer chambers of the seats of the main diaphragms 105a, 105b are delimited by respective side lids 125 provided with channels connected to the channels provided in the body 103.

Within the body 103 there are further accommodated - in corresponding seats - a pair of inversion diaphragms 109a, 109b controlling the movement of the inversion shaft 111 and dividing each its respective seat into an inner chamber and an outer chamber.

In an alternative embodiment, the inversion might also be achieved by using an inverter unit of the kind described in patent application EP 1 336 335 in the name of the same Applicant.

An adjustment channel connecting the outer chambers of the seats of the main diaphragms 105a, 105b with each other forms a closed volume circuit of air at atmospheric pressure, which is displaced as a consequence of the movement of said main diaphragms. A frequency adjusting pin 113 is provided in the adjustment channel.

A main slide valve 117 is mounted, by means of a U-piece 115, on the main shaft 107, said slide valve opening and closing, by means of the linear movement of the main shaft, first clearances arranged in the body 103 and supplying vacuum or atmospheric air to the milking assembly, and more particularly to the chamber between the teat cup shell and the liner of said milking assembly.

An inversion slide valve 121 is mounted, by means of a U-piece 119, on the inversion shaft 111, said inversion slide valve opening and closing, by means of the linear movement of the inversion shaft 111, second clearances arranged in the body 103 and supplying vacuum or atmospheric air to the chambers of the main diaphragms 105 so as to invert movement of the main shaft 107.

The main slide valve 117 and the inversion slide valve 121 slide on a plate 123 on which said first and second clearances are provided.

In the milking plants of known type the pneumatic pulsator is mounted along the vacuum line and its structure is devised so that its operation is automatic when the pulsator is subjected to vacuum conditions, as described hereinafter.

The inversion shaft 111 has two opposite end stop positions depending on the snapping of the inversion diaphragms: in a first end stop position, the inversion slide valve 121 attached to said inversion shaft connects the channel of the body 103 taking vacuum from the vacuum line to the inner chamber of the seat of a first main diaphragm 105a. By virtue of the pressure difference between the inner chamber (where vacuum is applied) and the outer chamber (where atmospheric air is present), said first main diaphragm 105a moves inwards and carries with it the main shaft 107 and the main slide valve 117. The displacement of the main slide valve 117 opens and closes the clearances provided in the plate 123 and connecting the vacuum from the first vacuum line to a first nipple of the pulsator and from this to the chamber between the teat cup shell and the liner of said milking assembly.

In this way the milking step of the operating cycle of the milking assembly is carried out.

The stroke of the main slide valve 117 continues until it opens a second port provided in the plate 123 and applying vacuum to the pulsator channel communicating with the outer chamber of a first inversion diaphragm 109b: said first inversion diaphragm 109b will snap outwards carrying with it the inversion shaft 111 and the inversion slide valve 121.

The movement of the inversion slide valve 121 interrupts the communication with the vacuum line of the inner chamber of the seat of the first main diaphragm 105a by introducing air at atmospheric pressure into said inner chamber: the first main diaphragm 105a will therefore tend to resume its rest position due to the fact that atmospheric pressure will be present in both chambers of the seat.

The movement of the inversion slide valve 121 opens the channel that applies vacuum to the inner chamber of the seat of the second main diaphragm 105b, thus inverting the travel of the main shaft 107.

The opposite movement of the main shaft 107 and of the main slide valve 117 connected thereto communicates the second pulsator nipple with a vacuum while air at atmospheric pressure is introduced into the first nipple.

This will supply atmospheric air to the chamber between the teat cup shell and the liner of said milking assembly, thus causing closing of the liner. In this way the massaging step of the operating cycle of the milking assembly is carried out.

These steps are repeated cyclically at a fixed frequency depending on the minimum cross-section of the pulsator adjustment channel determined by the position of the pin 113 and by the vacuum level of the vacuum line of the milking assembly.

With the same vacuum level of the vacuum line, by screwing the pin 113 the minimum cross-section for the passage of air through the adjustment channel is reduced, with consequent decrease in frequency; vice versa, by unscrewing said pin 113 an increase in the minimum cross-section for the passage of air through the adjustment channel is obtained, with consequent increase in frequency.

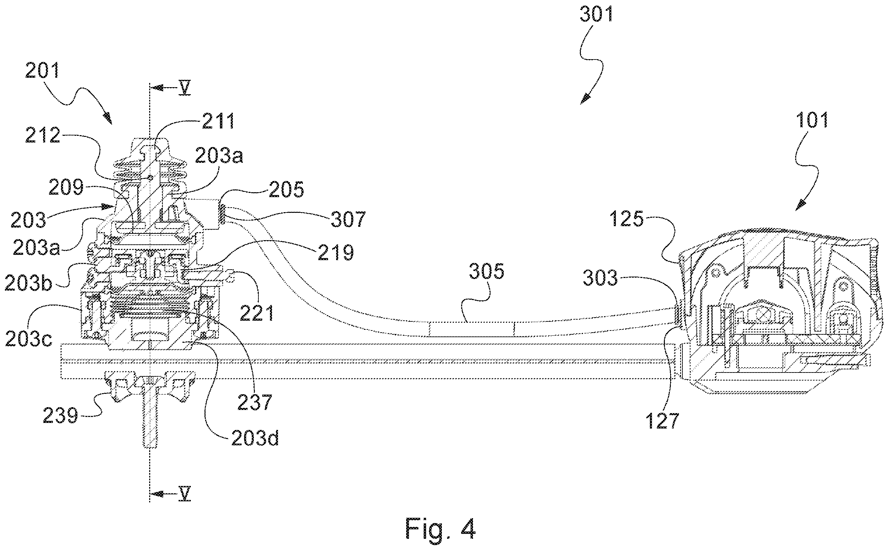

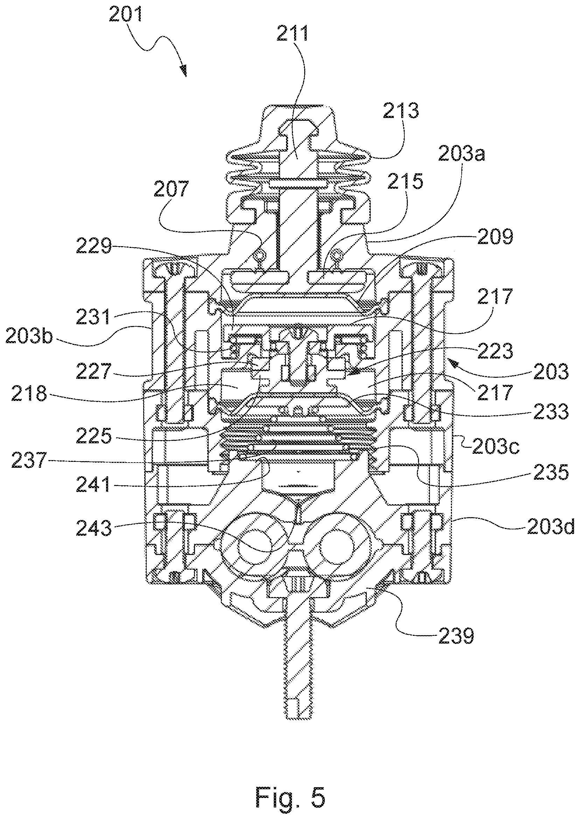

However, it is impossible to achieve frequencies suitable for stimulation (180 - 200 ppm) by acting onto the frequency adjusting pin 113. According to the invention, a stimulation device 201 - illustrated in Figures 4 and 5 - is provided which, in combination with the pulsator 101, forms a pulsator assembly 301, as shown in Figure 4.

Referring to Figure 4, in the pulsator assembly 301 according to the invention the lids 125 of the pulsator 101 have a nipple 127 for press-fitting a pneumatic cartridge 303 with quick-fit mounting for the first end of a corresponding connecting tube 305.

Said connecting tube 305 will preferably be made of rislan and may have an inner diameter of about 2 mm, an outer diameter of about 4 mm and a length not greater than 1.5 meters. The connecting tubes 305 connected to the lids 125 of the pulsator 101 will preferably have the same length.

The second end of each connecting tube 305 is connected to a respective cartridge 307 for connection to the body 203 of the stimulation device 201, more particularly by means of press-fitting in nipples 205 provided therefor and arranged in said body 203.

It will be apparent to those skilled in the art that the pulsator assembly can be obtained by coupling a stimulator device 201 to a pulsator of known type, simply by replacing the side lids of said conventional pulsator with lids having nipples for the press-fitting of pneumatic cartridges.

The body 203 of the stimulation device preferably consists of four separate portions 203a - 203d that can be assemble together, for example by screwing.

In the upper portion 203a of the body 203 there are provided the nipples 205, which are connected to by-pass channels 207 extending the path of the connecting tubes 305 and converge into a chamber provided in said upper portion 203a of the body 203 formed by the cavity of the upper body and closed at the bottom by an upper diaphragm 209.

The two by-pass channels 207 of the upper portion 203a of the body 203 have a section having a minimum cross-section with a diameter greater than the diameter of the minimum cross-section of the adjustment channel of the pulsator 101. For example, they have a section having a minimum cross-section with a diameter of about 0,5 mm and a length of about 1,5 mm, which sizes allow to obtain a frequency between 180 and 200 ppm during the stimulation step.

In the upper portion 203a of the body 203 there is provided a seat for accommodating a control push-button 211, which can be displaced within said seat but cannot rotate in it. The displacement of the push-button 211 is limited by a spring peg 212 and said push-button is housed within a bellows 213 protecting the inner part of the body 203 without hindering the movement of the push-button 211.

Said push-button 211 is provided with a seal 215 arranged to tightly seal the nipples 205 and the corresponding by-pass channels 207.

Below the upper portion 203a there is provided the upper middle portion 203b, which is delimited above by the upper diaphragm 209 and below by a lower diaphragm 233.

Said upper and lower diaphragms 209, 233 form, together with the middle part of the body 203, an upper chamber 217 and a lower chamber 218, in which chambers a fluid, preferably an incompressible fluid, is present.

In a preferred embodiment of the invention, said incompressible fluid is a fluid having a substantially constant viscosity within the temperature range 0 - 40 °C, such as for instance an anti-freeze liquid, preferably glycol, more preferably non-toxic propylene glycol.

The upper middle portion 203b further accommodates a non-return valve 223 comprising a valve body 225 having a seat for a sealing gasket 227, an upper disk 229 arranged aligned with a discharging port of the upper middle portion 203b and having one or more rapid discharging holes for the passage of the anti-freeze liquid when it is in its open position, and a spring 231 for controlling the upper disk 229.

The lower chamber 218 and the upper chamber 217 communicate with each other through a timing channel 219, in which an adjusting pin 221 is screwed which has the function of adjusting the duration of the stimulation period.

Below the upper middle portion 203b there is provided a lower middle portion 203c, which is delimited above by the lower diaphragm 233.

A housing chamber 235 for receiving a stimulation control spring 237 is provided in said lower middle portion 203c.

Below the lower middle portion 203c there is provided a lower portion 203d. Said lower portion 203d is shaped so as to be connectable to the pulsation tube of the milking plant and has a bracket 239 for coupling to said pulsation tube, said lower portion 203d and said bracket 239 preferably having anti-slip means, for example in the form of radial ribs.

The lower portion 203d has a seat 241 for supporting the stimulation control spring 237, suitably sized for conferring appropriate pre-load. Said lower portion 203d further has, at its bottom, a venting hole 243 allowing to discharge to the outside the air present within the housing chamber 235 enclosing the stimulation control spring 237 and thus to prevent formation of counter-pressures that may jeopardize the operation of the stimulation device 201.

The lower portion 203d or its fixing bracket 239 may be provided with fixing means for fixing them to the supporting structure of the milking plant.

If coupling of the stimulation device 201 to the pulsation tube is not desired, the lower portion 203d of the body can be in the form of a simple cover element.

In this connection it should be noted that the configuration of the described stimulation device 201 allows great flexibility in positioning.

More particularly, said device has the advantage that it can be positioned close to the working area, thus promoting the milking operations for systems with buckets or with trolleys.

The positioning flexibility of the stimulation device 201 is essential for applications in milking plants in which the pulsators are located in high line or low line, i.e. in locations uncomfortable or impossible to reach. The stimulation device 201 operates in the manner described here below. Under normal operating conditions the pneumatic pulsator 101 operates at a frequency determined by the adjusting pin 113 of the pulsator, for example 60 ppm.

By acting onto the push-button 211 of the stimulation device 201 until abutment of the end stop pin 212, the seal 215 of the push-button 211 opens the by-pass channels 207 communicating them with the channels of the pulsator 101 through the connecting tube 305.

The frequency of the pulsator 201 will shift from the nominal frequency determined by the adjusting pin 113 of the pulsator 101 (60 ppm) to the stimulation frequency determined by the size of the by-pass channel 207 (180 - 200 ppm).

In a particularly simple embodiment, the control push-button 211 could be actuated manually in the opposite direction after a desired time period, so as to close again the by-pass channels so as to bring again the pulsator frequency exactly to the nominal frequency.

However, in the described embodiment the stimulation device 201 comprises a timing system for automatically closing the by-pass channels after a preset time period.

When the push-button 211 is actuated, the disk of said push-button 211 presses against the upper diaphragm 209 thus deforming said diaphragm downwards and exerting a pressure onto the incompressible fluid contained in the upper chamber 217 located therebelow, which fluid in turn creates a force that is discharged onto the disk 229 of the non-return valve 233. Said disk 229 in turn discharges its force onto the spring 231 which becomes compressed, thus carrying downwards the disk 229 and together with it the valve body 225 and the corresponding sealing gasket 227. In this manner the non-return valve 223 opens, thus allowing quick passage of the incompressible fluid, which will pass into the lower chamber 218. The non-return valve is adapted to quickly transfer the fluid from the upper chamber 217 into the lower chamber 218 when the stimulation device is actuated, in order to avoid the need to exert a prolonged, high pressure onto the push-button 211 (which condition would exist if the only passage for the fluid would be that of timing channel 219, which is suitably throttled in order to have a stimulation cycle of 20-30 seconds).

The incompressible fluid transferred into the lower chamber 218 pushes the lower diaphragm 233, thus deforming it and making it compress, in turn, the stimulation control spring 237.

At this time, the push-button 211 is released, so that the force outside the system forcing the system to remain in its open position is removed.

The stimulation control spring 237 will then exert such a force that the lower diaphragm 233 will be brought again to its rest position. The lower diaphragm 233 will transfer this force to the overlying incompressible fluid, which will be pushed towards the upper chamber 217. Simultaneously, the non-return valve will close, thus interrupting the passage of the incompressible fluid between the lower chamber 218 and the upper chamber 217.

Under these conditions, the only path that the incompressible fluid will be allowed to follow towards the upper chamber will be the one through the timing channel 219, throttled by means of the adjusting pin 221. The position of the adjusting pin determines the throttling and, therefore, the time needed for the volume of anti-freeze liquid to pass from the lower chamber to the upper chamber (for example, 20 - 30 seconds).

Passing through the timing channel 219, the incompressible fluid will return into the upper chamber and push the upper diaphragm 209, which will start moving towards its starting position, thus pushing upwards the push-button 211. The stroke of said push-button 211 will end when its seal 215 exerts again its sealing action onto the channels of the nipples 205: at this time point the stimulation cycle ends, and the pulsator frequency returns to be the nominal frequency determined by the adjusting pin of the pulsator 201.

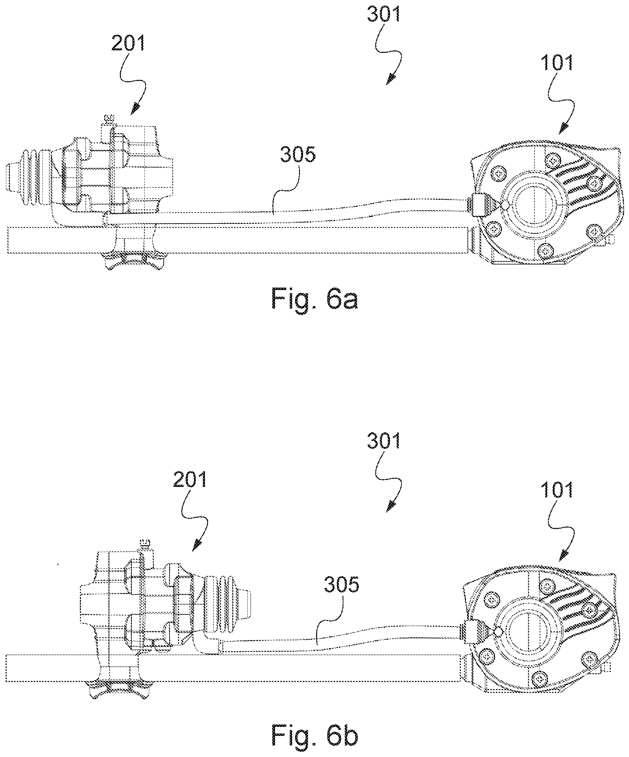

Figures 6a - 6b schematically show structural variants that are substantially identical to the embodiment shown in Figures 4 and 5 and differ only in the arrangement of the stimulation device 201 on the pulsation tube, said stimulation device 201 being rotated by 90° - relative to the embodiment shown in Figures 4 and 5 - in order to reduce the overall dimensions and to protect the components of the device.

It will be evident from the above description that the invention attains the objects set forth above as it allows to easily perform the stimulation step in milking plants using pneumatic pulsators.

It will further be evident that the description given herein is not limiting and that several modifications and variants are within the reach of those skilled in the art. The scope of the invention is defined by the appended claims.

## Claims

1. Pulsator assembly for a milking plant comprising:
- a pneumatic pulsator (101) which in turn comprises:
a body (103) in which channels arranged for the passage of a pneumatic medium are provided;
a main shaft (107) which is linearly movable and carries a main slide valve (117) suitable for selectively opening / closing communication clearances between said channels of said body (103) and the milking assembly of said milking plant during the linear movement of said main shaft;
means (109, 121) for periodically inverting the movement direction of said main shaft;
an adjustment channel for the passage of said pneumatic medium, whereby the minimum cross-section of said adjustment channel determines the frequency at which the movement direction of said main shaft is inverted;
- a stimulation device (201); and
- connecting means (303, 305, 307) for connecting said channels of said pneumatic pulsator to said connecting elements (205) of said stimulation device (201).
**characterized in that** said stimulation device (201) comprises a body (203) with one or more by-pass channels (207) provided in said body (203), which by-pass channels are in flow communication with said one or more channels for the passage of the pneumatic medium of said pulsator (101), said one or more by-pass channels having a section with a minimum cross-section, the diameter of which is greater than the minimum diameter of said one or more channels for the passage of the pneumatic medium of said pulsator (101), and **in that** said stimulation device comprises control means (211, 215) for allowing / preventing the flow communication between said by-pass channels (207) and said one or more channels for the passage of the pneumatic medium of said pulsator (101).

2. Pulsator assembly according to claim 1, wherein said control means of said stimulation device comprise a control push-button (211) and a seal (215) mounted on said control push-button, and wherein said control push-button is displaceable from a first position in which said seal (215) prevents the flow communication between said by-pass channels (207) of said stimulation device (201) and said one or more channels for the passage of the pneumatic medium of said pulsator (101) to a second position in which said seal allows (215) the flow communication between said by-pass channels (207) of said stimulation device (201) and said one or more channels for the passage of the pneumatic medium of said pulsator (101), and vice versa.

3. Pulsator assembly according to claim 2, wherein said control push-button (211) can be manually actuated for being brought from said first to said second position and from said second to said first position.

4. Pulsator assembly according to claim 2, wherein said control push-button (211) can be manually actuated for being brought from said first to said second position and wherein said stimulation device comprises a timing system for bringing said control push-button (211) from said second to said first position after a predetermined time period.

5. Pulsator assembly according to claim 4, wherein said timing system comprises:
- un upper chamber (217) arranged to contain a fluid, preferably an incompressible fluid, and comprising a discharging port;
- a non-return valve (223) driven by said control push-button (211), said non-return valve keeping said discharging port of said upper chamber closed when said control push-button is in said first position and allowing the passage of said fluid through said discharging port when said push-button is in said second position;
- a lower chamber (218) communicating with said upper chamber (217) through said discharging port of said upper chamber;
- a stimulation control spring (237) housed in a housing chamber (235), said stimulation control spring being compressed when said fluid flows from said upper chamber to said lower chamber and urging said fluid back towards said upper chamber while going back to its rest position;
- a timing channel (219) connecting said lower chamber to said upper chamber.

6. Pulsator assembly according to claim 6, wherein an adjusting pin (221) is provided in said timing channel (219), which adjusting pin is movable for determining throttling in said timing channel.

7. Pulsator assembly according to claim 5 or 6, wherein said fluid of said timing system is a fluid having a substantially constant viscosity in the temperature range between 0 °C and 40 °C, preferably an anti-freeze fluid, more preferably glycol, still more preferably non-toxic propylene glycol.

8. Pulsator assembly according to claim 1, wherein said adjustment channel is provided with a frequency adjusting pin (113) suitable for adjusting throttling of said adjustment channel.

## Patentansprüche

1. Pulsatoranordnung für eine Melkanlage mit:
- einem pneumatischen Pulsator (101), der aufweist:
einen Körper (103), in dem Kanäle zum Durchleiten eines pneumatischen Mediums vorgesehen sind,
einen Hauptschaft (107), der linear beweglich ist und ein Hauptschiebeventil (117) trägt, das dafür geeignet ist, Verbindungsräume zwischen den Kanälen des Körpers (103) und der Melkanordnung der Melkanlage während der linearen Bewegung des Hauptschafts selektiv zu öffnen/zu schließen,
Mittel (109, 121) zum periodischen Umkehren der Bewegungsrichtung des Hauptschafts,
einen Anpassungskanal für das Durchleiten des pneumatischen Mediums,
wobei der Mindestquerschnitt des Anpassungskanals die Frequenz bestimmt, mit welcher die Bewegungsrichtung des Hauptschaftes umgekehrt wird,
- einer Stimulationsvorrichtung (201) und
- Verbindungsmitteln (303, 305, 307) zum Verbinden der Kanäle des pneumatischen Pulsators mit den Verbindungselementen (205) der Stimulationsvorrichtung (201),
**dadurch gekennzeichnet, dass** die Stimulationsvorrichtung (201) einen Körper (203) mit einem oder mehreren Bypasskanälen (207) aufweist, die in dem Körper (203) vorgesehen sind, wobei diese Bypasskanäle strömungstechnisch mit einem oder mehreren Kanälen zum Durchleiten des pneumatischen Mediums des Pulsators (101) in Verbindung stehen, wobei einer oder mehrere Bypasskanäle einen Abschnitt mit einem Mindestquerschnitt haben, dessen Durchmesser größer als der Mindestdurchmesser der eines oder mehreren Kanäle zum Durchleiten des pneumatischen Mediums des Pulsators (101), und wobei die Stimulationsvorrichtung Steuermittel (211, 215) aufweist, um die strömungstechnische Verbindung zwischen den Bypasskanälen (207) und dem einem oder mehreren Kanälen zum Durchleiten des pneumatischen Mediums des Pulsators (101) zuzulassen/zu verhindern.

2. Pulsatoranordnung nach Anspruch 1, wobei die Steuermittel der Stimulationsvorrichtung eine Steuerdrucktaste (211) und eine Dichtung (215), die auf die Steuerdrucktaste montiert ist, aufweisen, und wobei die Steuerdrucktaste aus einer ersten Position, in der die Dichtung (315) eine Strömungsverbindung zwischen den Bypasskanälen (207) der Stimulationsvorrichtung (201) und den einen oder mehreren Kanälen zum Durchleiten des pneumatischen Mediums des Pulsators (101) verhindert, in eine zweite Position, in der die Dichtung (215) die Strömungsverbindung zwischen den Bypasskanälen (207) der Stimulationsvorrichtung (201) und dem oder den Kanälen für das Durchleiten des pneumatischen Mediums des Pulsators (201) ermöglicht, und umgekehrt beweglich ist.

3. Pulsatoranordnung nach Anspruch 2, wobei die Steuerdrucktaste (211) manuell betätigt werden kann, um aus der ersten in die zweite Position und aus der zweiten in die erste Position gebracht zu werden.

4. Pulsatoranordnung nach Anspruch 2, wobei die Steuerdrucktaste (211) manuell betätigt werden kann, um aus der ersten Position in die zweite Position gebracht zu werden, und wobei die Stimulationsvorrichtung ein Zeitschaltsystem aufweist, um die Steuerdrucktaste (211) aus der zweiten Position nach einer vorgegebenen Zeitdauer in die erste Position zu bringen.

5. Pulsatoranordnung nach Anspruch 4, wobei das Zeitschaltsystem aufweist:
- eine obere Kammer (217), die dafür ausgelegt ist, ein Fluid, vorzugsweise ein inkompressibles Fluid, aufzunehmen und einen Auslassanschluss aufweist,
- ein Einwegventil (223), das von der Steuerdrucktaste (211) gesteuert wird, wobei das Einwegventil den Auslassanschluss der oberen Kammer geschlossen hält, wenn die Steuerdrucktaste in der ersten Position ist, und den Durchgang des Fluids durch den Auslassanschluss ermöglicht, wenn Steuerdrucktaste in der zweiten Position ist,
- eine untere Kammer (218), die mit der oberen Kammer (217) über den Auslassanschluss der oberen Kammer in Verbindung steht,
- eine Stimulationssteuerfeder (237), die in einer Gehäusekammer (235) angeordnet ist, wobei die Stimulationssteuerfeder zusammen gedrückt wird, wenn das Fluid aus der oberen Kammer in die untere Kammer strömt, und das Fluid zurück in die obere Kammer drängt, wenn sie in ihre Ausgangsposition zurückkehrt,
- ein Zeitsteuerungskanal (219), der die untere Kammer mit der oberen Kammer verbindet.

6. Pulsatoranordnung nach Anspruch 6, wobei ein Anpassstift (221) in dem Zeitsteuerungskanal (219) angeordnet ist, wobei der Anpassstift beweglich ist, um eine Drosselung des Zeitsteuerungskanal vorzugeben.

7. Pulsatoranordnung nach Anspruch 5 oder 6, wobei das Fluid des Zeitsteuerungssystems ein Fluid ist, das ein im Wesentlichen konstante Viskosität in dem Temperaturbereich zwischen 0°C und 40°C hat, vorzugsweise eine Frostschutzflüssigkeit, besonders bevorzugt Glykol, noch mehr bevorzugt ein nicht-giftiges Propylenglykol.

8. Pulsatoranordnung nach Anspruch 1, wobei der Anpasskanal mit einem Frequenzeinstellstift (113) versehen ist, der dafür geeignet ist, die Drosselung des Fassungskanals einzustellen.

## Revendications

1. Ensemble pulsateur pour une installation de traite comprenant :
- un pulsateur pneumatique (101) qui à son tour comprend :
un corps (103) dans lequel sont prévus des canaux agencés pour le passage d'un milieu pneumatique ;
un arbre principal (107) qui est mobile linéairement et porte un distributeur à tiroir principal (117) apte à ouvrir/fermer de manière sélective des espaces de communication entre lesdits canaux dudit corps (103) et l'ensemble de traite de ladite installation de traite pendant le mouvement linéaire dudit arbre principal ;
des moyens (109, 121) pour inverser périodiquement la direction de mouvement dudit arbre principal ;
un canal de réglage pour le passage dudit milieu pneumatique, ce par quoi la section transversale minimale dudit canal de réglage détermine la fréquence à laquelle la direction de mouvement dudit arbre principal est inversée ;
- un dispositif de stimulation (201) ; et
- des moyens de liaison (303, 305, 307) pour relier lesdits canaux dudit pulsateur pneumatique auxdits éléments de liaison (205) dudit dispositif de stimulation (201), **caractérisé par le fait que** ledit dispositif de stimulation (201) comprend un corps (203) avec un ou plusieurs canaux de dérivation (207) prévus dans ledit corps (203), lesquels canaux de dérivation sont en communication fluidique avec ledit ou lesdits canaux pour le passage du milieu pneumatique dudit pulsateur (101), ledit ou lesdits canaux de dérivation ayant une section avec une section transversale minimale, dont le diamètre est supérieur au diamètre minimal dudit ou desdits canaux pour le passage du milieu pneumatique dudit pulsateur (101), et **par le fait que** ledit dispositif de stimulation comprend des moyens de commande (211, 215) pour autoriser/empêcher la communication fluidique entre lesdits canaux de dérivation (207) et ledit ou lesdits canaux pour le passage du milieu pneumatique dudit pulsateur (101).

2. Ensemble pulsateur selon la revendication 1, dans lequel lesdits moyens de commande dudit dispositif de stimulation comprennent un bouton-poussoir de commande (211) et un joint (215) monté sur ledit bouton-poussoir de commande, et ledit bouton-poussoir de commande étant déplaçable d'une première position, dans laquelle ledit joint (215) empêche la communication fluidique entre lesdits canaux de dérivation (207) dudit dispositif de stimulation (201) et ledit ou lesdits canaux pour le passage du milieu pneumatique dudit pulsateur (101), à une seconde position dans laquelle ledit joint (215) autorise la communication fluidique entre lesdits canaux de dérivation (207) dudit dispositif de stimulation (201) et ledit ou lesdits canaux pour le passage du milieu pneumatique dudit pulsateur (101), et vice versa.

3. Ensemble pulsateur selon la revendication 2, dans lequel ledit bouton-poussoir de commande (211) peut être actionné manuellement pour être amené de ladite première position à ladite seconde position et de ladite seconde position à ladite première position.

4. Ensemble pulsateur selon la revendication 2, dans lequel ledit bouton-poussoir de commande (211) peut être actionné manuellement pour être amené de ladite première position à ladite seconde position, et ledit dispositif de stimulation comprenant un système de temporisation pour amener ledit bouton-poussoir de commande (211) de ladite seconde position à ladite première position après une période de temps prédéterminée.

5. Ensemble pulsateur selon la revendication 4, dans lequel ledit système de temporisation comprend :
- une chambre supérieure (217) agencée pour contenir un fluide, de préférence un fluide incompressible, et comprenant un orifice de décharge ;
- un clapet de non-retour (223) entraîné par ledit bouton-poussoir de commande (211), ledit clapet de non-retour maintenant fermé ledit orifice de décharge de ladite chambre supérieure lorsque ledit bouton-poussoir de commande est dans ladite première position et autorisant le passage dudit fluide à travers ledit orifice de décharge lorsque ledit bouton-poussoir est dans ladite seconde position ;
- une chambre inférieure (218) communiquant avec ladite chambre supérieure (217) par ledit orifice de décharge de ladite chambre supérieure ;
- un ressort de commande de stimulation (237) reçu dans une chambre de réception (235), ledit ressort de commande de stimulation étant comprimé lorsque ledit fluide s'écoule de ladite chambre supérieure à ladite chambre inférieure et poussant ledit fluide en retour vers ladite chambre supérieure alors qu'il revient à sa position de repos ;
- un canal de temporisation (219) reliant ladite chambre inférieure à ladite chambre supérieure.

6. Ensemble pulsateur selon la revendication 6, dans lequel une broche de réglage (221) est prévue dans ledit canal de temporisation (219), laquelle broche de réglage est déplaçable pour déterminer un étranglement dans ledit canal de temporisation.

7. Ensemble pulsateur selon la revendication 5 ou 6, dans lequel ledit fluide dudit système de temporisation est un fluide ayant une viscosité sensiblement constante dans la plage de température comprise entre 0°C et 40°C, de préférence un fluide antigel, de façon davantage préférée du glycol, de façon encore davantage préférée du propylène glycol non-toxique.

8. Ensemble pulsateur selon la revendication 1, dans lequel ledit canal de réglage comporte une broche de réglage de fréquence (113) appropriée pour régler un étranglement dudit canal de réglage.
